# FASCICULE DE BREVET EUROPEEN

(11) **EP 2 014 873 B1**
(45) Date de publication et mention de la délivrance du brevet: **15.09.2010**
(21) Numéro de dépôt: 08160248.4
(22) Date de dépôt: 11.07.2008
(51) Int. Cl.: F01D 5/30

(54) **Clinquant pour aube de turbomachine**
Metallfolie für Laufradschaufel eines Turbotriebwerks
Tinsel for turbomachine vane

(30) Priorité: 13.07.2007 FR 0756466
(43) Date de publication de la demande: 14.01.2009
(73) Titulaire: SNECMA, 75015 Paris (FR)
(72) Inventeur: Douguet, Charles, 77870 Vulaines Sur Seine (FR); Jacq, Christophe, 77540 Courpalay (FR); Lombard, Jean-Pierre, 77830 Pamfou (FR)
(74) Mandataire: Besnard, Christophe Laurent

(56) Documents cités:
- EP-A- 0 495 586
- EP-A- 1 361 339
- EP-A- 1 764 480
- GB-A- 709 636
- US-A- 5 240 375
- US-A1- 2002 044 870

## Description

L'invention concerne un clinquant pour aube de turbomachine du type comprenant deux branches destinées à venir contre les portées du pied d'une aube, et une base reliant ces branches entre elles.

Elle se destine à tout type de turbomachine, terrestre ou aéronautique (turboréacteur, turbopropulseur, turbine à gaz terrestre, etc.). Dans le cas particulier d'un turboréacteur d'avion double-corps, double-flux, le clinquant de l'invention peut être utilisé pour les aubes de la soufflante (ou "fan"), pour les aubes mobiles du compresseur basse pression (ou "booster"), du compresseur haute pression, de la turbine haute pression ou de la turbine basse pression du turboréacteur.

Dans la présente demande, la direction axiale correspond à la direction de l'axe de rotation A du rotor de la turbomachine, et une direction radiale est une direction perpendiculaire à l'axe A. Par ailleurs, sauf précision contraire, les adjectifs "intérieur" et "extérieur" sont utilisés en référence à une direction radiale de sorte que la partie intérieure (i.e. radialement intérieure) d'un élément est plus proche de l'axe A que la partie extérieure (i.e. radialement extérieure) du même élément.

Dans un disque de rotor (i.e. un disque solidaire du rotor) d'une turbomachine, porteur d'aubes, les aubes (mobiles) sont fixées au disque par des systèmes d'attache, il peut s'agir d'attache brochée rectiligne ou curviligne, marteau, ou sapin. On peut décrire ces systèmes d'attache comme étant des dispositifs où les pieds d'aube forment les parties mâles du système et sont retenus radialement dans les parties femelles du système, ménagées à la périphérie extérieure du disque et communément dénommées "alvéoles".

Lors de la mise en rotation du rotor, les aubes sont soumises principalement aux efforts centrifuges ainsi qu'aux efforts aérodynamiques axiaux et les pieds d'aube viennent se plaquer en butée contre les parties du disque bordant l'ouverture extérieure des alvéoles, sous l'effet des efforts centrifuges. Les surfaces des pieds d'aube et du disque en butée l'une contre l'autre, sont communément dénommées "portées". Ces portées sont soumises à une pression (résultant desdits efforts, appliqués sur la surface de ces portées). On peut estimer que cette pression dépend en première approximation du carré de la vitesse de rotation du rotor.

On comprend donc que les variations de vitesse de rotation du rotor au cours du cycle de fonctionnement de la turbomachine : de l'arrêt au plein gaz, en passant par les régimes particuliers intermédiaires (ralenti, taxi, croisière, descente, si l'on considère une turbomachine aéronautique) induisent des variations de pression aux niveaux des portées définies précédemment. Ces variations de pressions associées aux déformations élastiques des pièces en contact provoquent des mouvements relatifs entre pied d'aube et disque. Ces mouvements relatifs, appelés glissement ou séparation selon leur nature, induisent des phénomènes d'usure des portées des aubes ou du disque lorsqu'ils sont répétés. On peut également attribuer aux mouvements dynamiques des aubes à un régime de rotation donné (réponses des aubes à des sollicitations alternées de nature harmonique ou transitoire) une contribution dans le phénomène d'usure desdites portées. Or, ces phénomènes d'usure sont pénalisants pour la durée de vie de la turbomachine.

Des solutions dites "anti-usures", c'est-à-dire retardant l'apparition de l'usure aux interfaces de contact, peuvent être adoptées, parmi lesquelles des solutions basées sur l'introduction d'un troisième corps, appelé clinquant, entre les pieds d'aubes et le disque. Ce clinquant permet, notamment, de doubler les interfaces de contact (on passe d'une interface aube/disque à deux interfaces aube/clinquant et clinquant/disque) et de réduire les mouvements relatifs entre les pièces en contact, ce qui permet de réduire les usures en fonctionnement.

Des exemples de clinquant connu, du type précité, sont décrit dans les document FR 2890684 et US 5 240 375. Ce clinquant est réalisé entièrement en métal, il s'agit d'une feuille métallique pliée de façon appropriée.

L'invention a pour objectif de proposer un clinquant plus efficace que le clinquant connu précité, en terme de prestation "anti-usure", de manière à mieux protéger les portées des aubes et du disque.

Cet objectif est atteint grâce à un clinquant pour aube de turbomachine comprenant deux branches destinées à venir contre les portées du pied de l'aube, et une base reliant ces branches entre elles, présentant, au moins au niveau de ses branches, une structure multicouche avec au moins trois couches fixées l'une à l'autre et superposées dans cet ordre: une première couche en un premier matériau, une deuxième couche en un deuxième matériau, et une troisième couche en un troisième matériau, différent ou non du premier matériau, lesdits premier et troisième matériaux présentant respectivement des premier et troisième modules d'Young de valeurs E et E', à une température de fonctionnement quelconque dans la plage de températures de fonctionnement du clinquant, et ledit deuxième matériau présentant un deuxième module d'Young de valeur comprise entre E/20 et E/5 et entre E'/20 et E'/5, à ladite température de fonctionnement quelconque.

On notera que le module d'Young d'un matériau varie en fonction de la température de ce matériau et que, par conséquent, les valeurs E et E' dépendent de la température.

Par températures de fonctionnement, on entend désigner les températures auxquelles le clinquant est soumis lorsque la turbomachine est en marche, dans des conditions normales d'utilisation. Conformément à l'invention, la relation entre lesdits premier, deuxième et troisième modules d'Young, définie ci-dessus, doit être vérifiée pour toutes les températures de la plage de températures de fonctionnement du clinquant.

Par exemple, lorsque le clinquant appartient à la soufflante ou au compresseur basse pression d'un turboréacteur d'avion double-corps, double-flux, sa température de fonctionnement varie entre 20 et 150°C. Lorsqu'il appartient au compresseur haute pression d'un turboréacteur d'avion double-corps, double-flux, sa température de fonctionnement varie entre 150 et 500°C. Lorsqu'il appartient à la turbine haute pression d'un turboréacteur d'avion double-corps, double-flux, sa température de fonctionnement varie entre 400 et 700°C.

La présente invention est donc relative à l'adoption de ladite structure multicouche dans laquelle les caractéristiques (isotropes ou anisotropes) d'élasticité du deuxième matériau sont supérieures à celles (isotropes ou anisotropes) du premier et du troisième matériau dans la plage de fonctionnement thermique souhaitée.

Selon un mode de réalisation, lesdits premier et troisième matériaux sont des alliages métalliques ou des matériaux composites à matrice organique (identiques ou différents), tandis que ledit deuxième matériau est non métallique. Par exemple, et de façon non exhaustive, le deuxième matériau peut être en caoutchouc, en silicone, en polyimide, en verre, ou en résine époxy.

La structure multicouche du clinquant de l'invention a pour effets:
- de répartir uniformément les pressions de contact par accommodation du clinquant via l'élasticité de la deuxième couche;
- de limiter les mouvements relatifs des pièces, dus aux forces centrifuges lors d'un changement de vitesse de rotation, par cisaillement "statique" de la deuxième couche; et
- d'amortir les mouvements dynamiques éventuels de l'aube par cisaillement "dynamique" de la deuxième couche.

Ces effets ont, notamment, pour conséquence d'empêcher ou de limiter les phénomènes d'usure au niveau des portées et, ainsi, d'augmenter la durée de vie des pieds d'aube et des disques.

Ces effets sont renforcés lorsque le deuxième matériau a un comportement viscoélastique dans la plage de températures de fonctionnement du clinquant, plus particulièrement en ce qui concerne l'amortissement des mouvements dynamiques éventuels de l'aube.

L'invention a également pour objet un ensemble de rotor de turbomachine comprenant : un disque de rotor présentant sur sa périphérie extérieure des alvéoles; des aubes fixées par leur pied dans lesdites alvéoles; et des clinquants selon l'invention, chaque branche de chaque clinquant étant disposée entre la portée d'un pied d'aube et la portée correspondante du disque.

Enfin, l'invention a pour objet une turbomachine comprenant un tel ensemble de rotor.

L'invention et ses avantages seront mieux compris à la lecture de la description détaillée qui suit. Cette description fait référence aux figures annexées sur lesquelles :
- la figure 1 représente partiellement, en vue éclatée et de manière schématique, un ensemble de rotor de turbomachine comprenant un disque de rotor, un exemple de clinquant selon l'invention, et un pied d'aube ;
- la figure 2 est une vue en coupe radiale dans le plan II-II, de l'ensemble de la figure 1, une fois celui-ci assemblé ;
- la figure 3 est une vue en coupe analogue à celle de la figure 2 montrant un autre exemple de clinquant selon l'invention; et
- la figure 4 est une vue en coupe analogue à celle de la figure 2 montrant un autre exemple de clinquant selon l'invention, disposé entre deux alvéoles adjacentes.

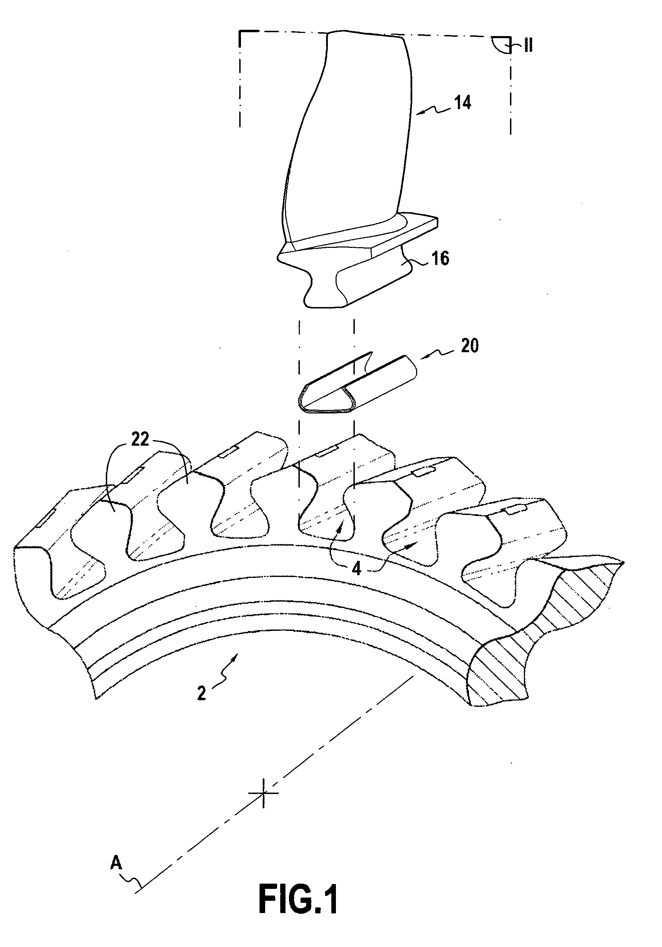

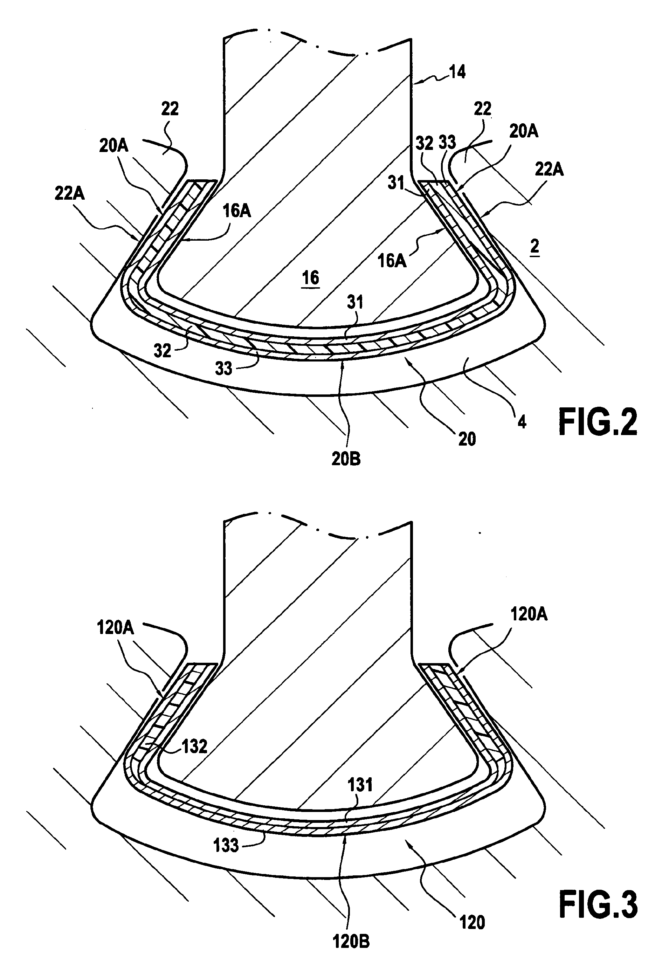

Sur les figures 1 et 2, sont représentés : un disque de rotor 2 présentant à sa périphérie de nombreuses rainures, ou alvéoles 4, définissant un logement susceptible de recevoir le pied 16 d'une aube 14, ce pied 16 étant entouré d'un clinquant 20. Le pied d'aube 16 et le disque de soufflante 2 sont réalisés, par exemple, en alliage de titane.

On notera qu'il existe des montages (non représentés) comprenant, en outre, une cale placée entre le pied d'aube 16 et le fond de l'alvéole 4.

Lors de la mise en rotation du disque 2, les aubes 14 sont soumises aux efforts centrifuges et les portées 16A des pieds d'aube 16 viennent se plaquer en butée contre les portées 22A du disque 2. Dans l'exemple, les portées 16A sont les flancs des pieds d'aube 16, tandis les portées 22A sont les faces inférieures des parties du disque en forme de lèvres 22 qui bordent l'ouverture extérieure des alvéoles 4.

Le clinquant 20 comprend deux branches latérales 20A destinées à venir contre les portées 16A du pied d'aube 16, et une base 20B (ici une plaque) reliant ces branches entre elles et s'étendant sous le pied d'aube 16. Le clinquant 20 est une pièce d'usure et a pour principale fonction de limiter l'usure du pied d'aube 16 et du disque de soufflante 2.

Dans l'exemple de la figure 2, le clinquant 20 présente au niveau de ses branches 20A et de sa base 20B, une structure multicouche avec trois couches 31, 32, 33 adhérant l'une à l'autre. Ces trois couches sont superposées dans cet ordre, du pied d'aube 16 vers le disque 2 : une première couche 31 en un premier matériau, une deuxième couche 32 en un deuxième matériau, et une troisième couche 33 en un troisième matériau. Dans l'exemple, le troisième matériau est identique au premier matériau, de sorte qu'ils présentent un même premier module d'Young. Conformément à l'invention, le premier module d'Young a une valeur E, à une température quelconque T de fonctionnement du clinquant, et ledit deuxième matériau présente un deuxième module d'Young de valeur comprise entre E/20 et E/5 à ladite température T.

On notera que le clinquant 20 doit présenter une certaine rigidité afin d'assurer sa tenue mécanique et sa fonction anti-usure, de sorte que la valeur E est, de préférence, supérieure ou égale à 110 000 MPa pour un clinquant métallique (par exemple : 210 000 MPa pour un clinquant en un superalliage de base Nickel, du type de ceux commercialisés sous la dénomination "Inconel") et supérieure ou égale à 70 000 MPa pour un clinquant en matériau composite à matrice organique.

Concernant le choix des matériaux, il est bien entendu fonction des températures de fonctionnement du clinquant.

Lorsque l'ensemble de rotor appartient à la soufflante ou au compresseur basse pression d'un turboréacteur d'avion double-corps, double-flux, il est soumis à des températures de fonctionnement variant entre 20 et 150°C. Dans ce cas, à titre d'exemple, on peut choisir comme premier matériau un superalliage de base Ni avec plus de 15% en poids de Fe et de Cr, comme le superalliage commercialisé sous la dénomination "Inconel 718"; et comme deuxième matériau du caoutchouc (naturel ou synthétique). Dans ce même cas, on peut choisir comme premier matériau un matériau composite avec une matrice en résine époxy et des fibres de renfort, par exemple en carbone; et comme deuxième matériau une résine époxy seule (la différence de module d'Young entre le deuxième et le premier matériau étant liée à l'absence de fibres).

Lorsque l'ensemble appartient au compresseur haute pression d'un turboréacteur d'avion double-corps, double-flux, il est soumis à des températures de fonctionnement variant entre 150 et 500°C. Dans ce cas, à titre d'exemple, on peut choisir comme premier matériau un superalliage de base Ni avec plus de 15% en poids de Fe et de Cr, comme le superalliage commercialisé sous la dénomination "Inconel 718"; et comme deuxième matériau un silicone ou un polyimide.

Lorsque l'ensemble appartient à la turbine haute pression d'un turboréacteur d'avion double-corps, double-flux, il est soumis à des températures de fonctionnement variant entre 400 et 700 °. Dans ce cas, à titre d'exemple, on peut choisir comme premier matériau un superalliage de base Ni avec plus de 15% en poids de Fe et de Cr, comme le superalliage commercialisé sous la dénomination "Inconel 718"; et comme deuxième matériau du verre (qui dans cette plage de température de fonctionnement a un comportement viscoélastique).

D'une manière générale, on notera que la fixation desdites couches 31, 32, 33 entre elles peut être obtenue de différentes manières et, notamment:
- par adhésion naturelle, lors de la polymérisation de la deuxième couche 32 (lors de sa vulcanisation si elle est en caoutchouc),
- par collage,
- par soudage partiel des couches 31 et 33, puis polissage,
- par brasage partiel des couches 31 et 33, puis polissage,
- par sertissage, ou
- en combinant plusieurs des techniques précitées (par exemple par adhésion naturelle et par sertissage).

Lesdites couches doivent faire corps l'une avec l'autre pour former ladite structure multicouche et, bien entendu, la fixation obtenue doit être suffisante pour empêcher le délaminage de la structure en fonctionnement ou le fluage de la couche 32.

La figure 3 est une vue en coupe analogue à celle de la figure 2 montrant un autre exemple de clinquant 120 selon l'invention. Les éléments ou parties d'élément analogues entre les figures 2 et 3 sont repérés par les mêmes références numériques augmentées de 100.

L'exemple de la figure 3 diffère de celui de la figure 2 en ce que la base 120B du clinquant 120 est formée par les première et deuxième couches 131 et 133 jointes. Seules les branches 120A du clinquant présentent une structure multicouche composées des première, deuxième et troisième couches 131, 132, 133 selon l'invention. On notera que la base 120B du clinquant pourrait également être formée uniquement par la troisième couche 133, ou bien uniquement par la première couche 131

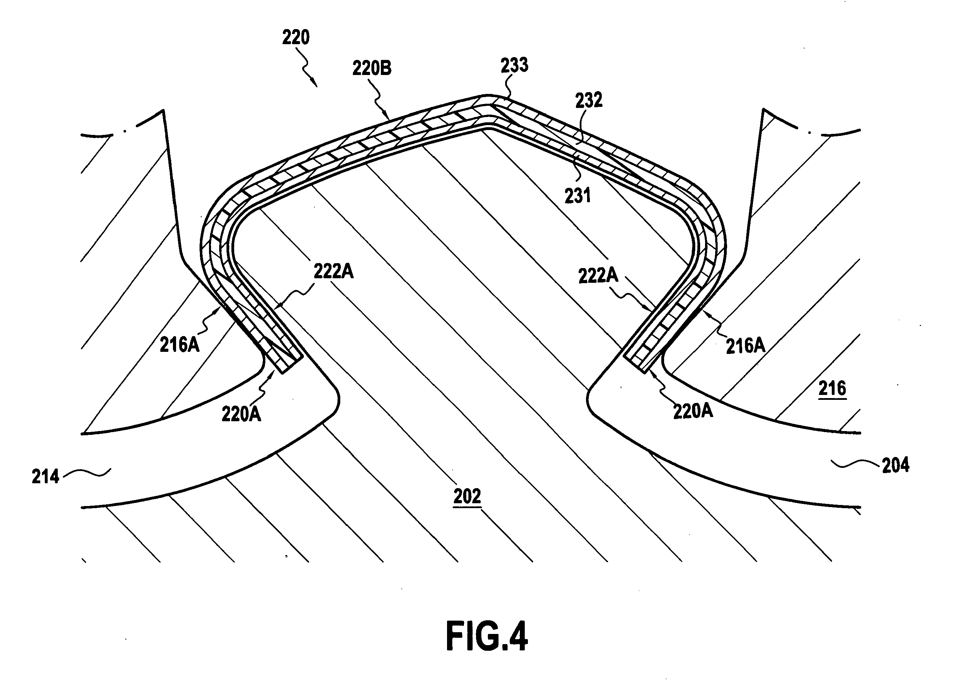

La figure 4 est une vue en coupe analogue à celle de la figure 2 montrant un autre exemple de clinquant 220 selon l'invention. Les éléments ou parties d'élément analogues entre les figures 2 et 4 sont repérés par les mêmes références numériques augmentées de 200.

L'exemple de la figure 4 diffère de celui de la figure 2 en ce que la base 220B du clinquant 220 s'étend sur la périphérie externe du disque 202 de rotor, entre deux alvéoles 204 adjacentes, tandis que chaque branche 220A du clinquant rentre dans une alvéole 204 et se loge entre la portée 216A du pied d'aube 216 et la portée 222A correspondante du disque 202.

Le clinquant 220 présente une structure multicouche analogue à celle du clinquant 20 de la figure 2, avec trois couches 231, 232, 233 fixées l'une à l'autre et superposées.

## Revendications

1. Clinquant (20) pour aube (14) de turbomachine comprenant deux branches (20A) destinées à venir contre les portées (16A) du pied (16) de l'aube, et une base (20B) reliant ces branches entre elles, présentant, au moins au niveau de ses branches (20A), une structure multicouche avec au moins trois couches (31, 32, 33) fixées l'une à l'autre et superposées dans cet ordre: une première couche (31) en un premier matériau, une deuxième couche (32) en un deuxième matériau, et une troisième couche (33) en un troisième matériau, différent ou non du premier matériau, lesdits premier et troisième matériaux présentant respectivement des premier et troisième modules d'Young de valeurs E et E', à une température de fonctionnement quelconque dans la plage de températures de fonctionnement du clinquant, **caractérisé en ce que** ledit deuxième matériau présente un deuxième module d'Young de valeur comprise entre E/20 et E/5, et entre E'/20 et E'/5, à ladite température de fonctionnement.

2. Clinquant selon la revendication 1, dans lequel lesdits premier et troisième matériaux sont identiques.

3. Clinquant selon la revendication 1 ou 2, dans lequel lesdits premier et troisième matériaux sont des alliages métalliques ou des matériaux composites à matrice organique, tandis que le deuxième matériau est non métallique.

4. Clinquant selon l'une quelconque des revendications 1 à 3, dans lequel ledit deuxième matériau a un comportement viscoélastique dans la plage de températures de fonctionnement du clinquant.

5. Clinquant selon l'une quelconque des revendications 1 à 4, dans lequel lesdites première, deuxième et troisième couches (31, 32, 33) s'étendent également au niveau de la base (20B) du clinquant.

6. Ensemble de rotor de turbomachine comprenant : un disque (2) de rotor présentant sur sa périphérie extérieure des alvéoles (4); des aubes (14) fixées par leur pied (16) dans lesdites alvéoles (4); et des clinquants (20) selon l'une quelconque des revendications précédentes, chaque branche (20A) de chaque clinquant étant disposée entre la portée (16A) d'un pied d'aube et la portée (22A) correspondante du disque.

7. Ensemble de rotor de turbomachine selon la revendication 6, dans lequel la base (20B) de chaque clinquant (20) s'étend sous chaque pied d'aube.

8. Ensemble de rotor de turbomachine selon la revendication 6, dans lequel la base (220B) de chaque clinquant (220) s'étend sur la périphérie externe du disque (202), entre deux alvéoles (204) adjacentes.

9. Turbomachine comprenant un ensemble de rotor selon l'une quelconque des revendications 6 à 8.

## Claims

1. A shim (20) for a turbomachine blade (14), the shim comprising two branches (20A) for coming against bearing surfaces (16A) of the blade root (16), and a base part (20B) interconnecting the branches, the shim presenting, at least in its branches (20A), a multilayer structure having at least three layers (31, 32, 33) that are fastened to one another and superposed in the following order: a first layer (31) of a first material; a second layer (32) of a second material; and a third layer (33) of a third material that is optionally different from the first material, said first and third materials presenting respective first and third Young's moduluses of values E and E' at any arbitrary operating temperature in the operating temperature range of the shim, the shim being **characterized in that** said second material presents a second Young's modulus of value lying in the range E/20 to E/5 and in the range E'/20 to E'/5 at said operating temperature.

2. A shim according to claim 1, in which said first and third materials are identical.

3. A shim according to claim 1 or claim 2, in which said first and third materials are metal alloys or organic matrix composite materials, while the second material is non-metallic.

4. A shim according to any one of claims 1 to 3, in which said second material presents viscoelastic behavior in the operating temperature range of the shim.

5. A shim according to any one of claims 1 to 4, in which said first, second, and third layers (31, 32, 33) also extend in the base part (20B) of the shim.

6. A turbomachine rotor assembly comprising: a rotor disk (2) presenting slots (4) in its outer periphery; blades (14) fastened by their roots (16) in said slots (4); and shims (20) according to any preceding claim, each branch (20A) of each shim being disposed between the bearing surface (16A) of a blade root and the corresponding bearing surface (22A) of the disk.

7. A turbomachine rotor assembly according to claim 6, in which the base part (20B) of each shim (20) extends under each blade root.

8. A turbomachine rotor assembly according to claim 6, in which the base part (220B) of each shim (220) extends over the outer periphery of the disk (202), between two adjacent slots (204).

9. A turbomachine comprising a rotor assembly according to any one of claims 6 to 8.

## Patentansprüche

1. Zwischenstück (20) für eine Schaufel (14) einer Turbomaschine, mit zwei Schenkeln (20A), die dazu bestimmt sind, an die Auflageflächen (16A) des Fußes (16) der Schaufel zu gelangen, und mit einer diese Schenkel untereinander verbindenden Basis (20B), das wenigstens im Bereich seiner Schenkel (20A) eine mehrlagige Struktur mit wenigstens drei Lagen (31, 32, 33) aufweist, die aneinander befestigt und in dieser Reihenfolge übereinander angeordnet sind: eine erste Lage (31) aus einem ersten Material, eine zweite Lage (32) aus einem zweiten Material und eine dritte Lage (33) aus einem dritten Material, das ein anderes als das erste Material ist oder nicht, wobei das erste und das dritte Material einen ersten bzw. einen dritten Elastizitätsmodul mit den Werten E und E' bei einer beliebigen Betriebstemperatur im Betriebstemperaturbereich des Zwischenstücks aufweisen, **dadurch gekennzeichnet, daß** das zweite Material einen zweiten Elastizitätsmodul mit einem Wert zwischen E/20 und E/5 und zwischen E'/20 und E'/5 bei der Betriebstemperatur aufweist.

2. Zwischenstück nach Anspruch 1, wobei das erste und das dritte Material identisch sind.

3. Zwischenstück nach Anspruch 1 oder 2, wobei das erste und das dritte Material Metallegierungen oder Verbundwerkstoffe mit organischer Matrix sind, während das zweite Material nichtmetallisch ist.

4. Zwischenstück nach einem der Ansprüche 1 bis 3, wobei das zweite Material im Betriebstemperaturbereich des Zwischenstücks ein viskoelastisches Verhalten besitzt.

5. Zwischenstück nach einem der Ansprüche 1 bis 4, wobei die erste, die zweite und die dritte Lage (31, 32, 33) sich auch im Bereich der Basis (20B) des Zwischenstücks erstrecken.

6. Rotoranordnung einer Turbomaschine umfassend: eine Rotorscheibe (2), die an ihrem Außenumfang Hohlräume (4) aufweist, Schaufeln (14), die über ihren Fuß (16) in den Hohlräumen (4) befestigt sind, sowie Zwischenstücke (20) nach einem der vorhergehenden Ansprüche, wobei jeder Schenkel (20A) eines jeden Zwischenstücks zwischen der Auflagefläche (16A) eines Schaufelfußes und der entsprechenden Auflagefläche (22A) der Scheibe angeordnet ist.

7. Rotoranordnung einer Turbomaschine nach Anspruch 6, wobei die Basis (20B) eines jeden Zwischenstücks (20) unter jedem Schaufelfuß verläuft.

8. Rotoranordnung einer Turbomaschine nach Anspruch 6, wobei die Basis (220B) eines jeden Zwischenstücks (220) sich über den Außenumfang der Scheibe (202), zwischen zwei benachbarten Hohlräumen (204) erstreckt.

9. Turbomaschine, die eine Rotoranordnung nach einem der Ansprüche 6 bis 8 umfaßt.
